# EUROPÄISCHE PATENTSCHRIFT

(11) **EP 1 035 086 B1**
(45) Veröffentlichungstag und Bekanntmachung des Hinweises auf die Patenterteilung: **22.10.2003**
(21) Anmeldenummer: 00104215.9
(22) Anmeldetag: 01.03.2000
(51) Int. Cl.: C04B 7/47, F28C 3/02

(54) **Verfahren und Einrichtung zur Kühlung eines Heissgasstromes in einer Mischkammer**
Process and apparatus for cooling a stream of hot gas in a mixing chamber
Procédé et dispositif pour refroidir des gazes chauds dans une chambre de mélange

(30) Priorität: 12.03.1999 DE 19910927
(43) Veröffentlichungstag der Anmeldung: 13.09.2000
(73) Patentinhaber: KHD Humboldt-Wedag AG, 51103 Köln (DE)
(72) Erfinder: Meyer, Hans-Wilhelm, Dr., 90579 Langenzenn (DE); Carstens, Frank, Allentown, PA 18104 (DE); Hunold, Peter, 51519 Odenthal (DE)

(56) Entgegenhaltungen:
- GB-A- 2 161 593
- US-A- 4 652 725
- US-A- 4 874 037
- US-A- 5 463 967
- US-A- 5 704 780

## Beschreibung

Die Erfindung betrifft ein Verfahren zur Kühlung eines Heißgasstroms, der mit zu Anbackungen neigenden Staubfrachten und/oder gasförmigen/dampfförmigen Schadstoffen belastet ist, mit einer Mischkammer zur Einmischung von Kühlluft in den Heißgasstrom zwecks nachfolgender Abtrennung schadstoffhaltigen Staubes vom abgekühlten Mischgasstrom und/oder Verringerung gasförmiger Emissionen. Außerdem betrifft die Erfindung eine Einrichtung zur Durchführung des Verfahrens.

In der Technologie der Herstellung von Zementklinker aus Zementrohmehl, das in wenigstens einem vom Abgas eines Drehrohrofens durchströmten Wärmetauscherstrang insbesondere Zyklonschwebegaswärmetauschersystem vorerhitzt und in der Sinterzone des Drehrohrofens zu Zementklinker gebrannt wird, ist es bekannt, daß viele Einsatzstoffe, ggf. auch die Brennstoffe, Nebenbestandteile wie z. B. Alkaliverbindungen, Chlor, Schwefelverbindungen, Schwermetalle etc. enthalten, die im Bereich der Sinterzone z. B. als Alkalichlorid- und Alkalisulfatverbindungen verdampfen, im Vorwärmerbereich wieder kondensieren/kristallisieren und somit Kreisläufe aufbauen, wodurch sowohl die Qualität des Zementklinkers ungünstig beeinflußt als auch der Brennprozeß selbst erheblich gestört werden können. Zur Unterdrückung solcher Kreisläufe in einer Zementklinkerbrennanlage sowie zur Reduzierung des Gehaltes kreislaufbildender Stoffe im Klinkerherstellungsprozeß ist es bekannt (z. B. DE-A-197 18 259), durch einen sogenannten Bypassgasabzug bzw. Teilgasabzug einen Teil der die volatilen Verbindungen enthaltenden heißen staubbeladenen Ofenabgase aus dem unteren Bereich der Drehofenabgassteigleitung bzw. direkt aus der Drehofeneinlaufkammer abzuzweigen, in einer Mischkammer durch Einführung eines Kühlmediums wie Wasser und/oder Außenluft abzukühlen, die im Teilgasstrom enthaltenen dampfförmigen Schadstoffe an den Feststoffpartikeln kondensieren zu lassen und dann den abgekühlten Teilgasstrom durch Abtrennung des schadstoffhaltigen Staubes zu reinigen.

Um die zu behandelnden Volumina des Teilgasstromes nicht zu groß werden zu lassen, ist es vorteilhaft, in den z. B. 1100° C heißen Teilgasstrom nicht nur Außenluft als Kühlluft einzumischen, sondern auch Wasser einzudüsen, das die Schockkühlung des Teilgasstromes unterstützen soll. Bei den bisher bekannten Mischkammern ist es aber nicht gelungen, durch die üblich gewesene tangentiale Kühlluftzufuhr eine rasche gleichmäßige Temperaturverteilung über den abgekühlten Mischgasstrom zu erreichen. Vielmehr verweilte die Kühlluft hauptsächlich im Peripheriebereich der Mischkammer, d. h. die Innenwandung der Mischkammer konnte gut gekühlt werden, während der Kernbereich des Heißgasstroms zumindest über eine lange Strecke und über eine lange Zeit fast ungekühlt verblieb. Bei der Eindüsung von Kühlwasser ist dabei die Gefahr nicht ausgeschlossen, daß es gerade im kühlen Mischkammerwandungsbereich zu unerwünschten Feststoffanbackungen kommt, weil die kondensierenden/kristallisierenden Schadstoffdämpfe dem Kodensationsgradienten folgend, der vom Heißgasstromzentrum zur kalten Mischkammerwandung ansteigt, sich bevorzugt nur im Mischkammerperipheriebereich verfestigen, während sie im Kernbereich des Heißgasstromes unkondensiert bleiben.

Der Erfindung liegt die Aufgabe zugrunde, einen Heißgasstrom, der wie bei einer Bypassgas- bzw. Teilgasabzugsanlage einer Zementklinkerproduktionslinie mit zu Anbackungen neigenden Staubfrachten und/oder kondensierenden/kristallisierenden Dämpfen belastet ist, so mit Kühlluft zu vermischen, daß rasch ein abgekühlter Mischgasstrom entsteht, bei dem der Kodensationsgradient nicht mehr von einem heißen Kernstrom zu einem vergleichsweise kühlen Peripheriebereich ansteigt.

Diese Aufgabe wird verfahrensmäßig mit den Maßnahmen des Kennzeichnungsteils des Anspruchs 1 und vorrichtungsmäßig mit den Merkmalen des Kennzeichnungsteils des Anspruchs 3 gelöst. Vorteilhafte Ausgestaltungen der Erfindung sind in den Unteransprüchen angegeben.

Erfindungsgemäß wird in der Mischkammer die Kühlluft in den Heißgasstrom einer Temperatur von z. B. 1200° C nicht wie üblich von außen tangential eingeführt, was zu einem ungleichmäßigen Temperaturprofil des abgekühlten Mischgasstroms mit einem z. B. etwa 800° C heißen Kernstrom und einer etwa 100° C heißen Strömungsperipherie führen würde, sondern die Kühlluft wird durch wenigstens eine Eintrittsöffnung im Mantel der Mischkammer derart in den Heißgasstrom eingeführt, daß die einströmende Kühlluft im Peripheriebereich der Mischkammer gegen wenigstens ein Verteilerplattensystem prallt, durch welches die Kühlluft sowohl auf das Zentrum als auch auf die Peripherie der Mischkammer rasch verteilt wird, so daß ein abgekühlter Mischgasstrom mit über den gesamten Querschnitt homogenem Temperatur- und Druckprofil erzielt wird. So kann das vergleichmäßigte Temperaturprofil des abgekühlten Mischgasstroms über den Querschnitt betrachtet bei etwa z. B. 350° C liegen, wodurch die Kondensation der im Heißgasstrom enthaltenen Schadstoffdämpfe gewährleistet ist und die Gefahr von Feststoffanbackungen an der Mischkammerwandung sowie im Bereich der Kühllufteintrittsöffnung vermieden ist. Das homogene Temperatur- und Druckprofil über den Querschnitt des in der Mischkammer abgekühlten Mischgasstroms ist, abgesehen von der möglichst gleichmäßigen Verdampfung des in den Heißgasstrom eingedüsten Kühlwassers, auch Voraussetzung für effiziente Maßnahmen zur Reduzierung von Schadstoffemissionen wie z. B. SOx, NOx, Dioxine und Furane, die im Drehofenabgas einer Zementklinkerproduktionslinie enthalten sein können. Als Beispiel hierzu wird angegeben, daß in den erfindungsgemäß abgekühlten Mischgasstrom z. B. Kalkmilch zur Verringerung von Schadstoffemissionen eingedüst werden kann.

Die Ebene der Kühlluftverteilerprallplatte, die in der zylindrischen Mischkammer der erfindungsgemäßen Einrichtung im Bereich der Kühlluft-Eintrittsöffnung angeordnet ist, liegt parallel zur Mischkammerachse, wobei sich diese Verteilerprallplatte ausgehend vom Mischkammermantelbereich radial bzw. sekantial liegend von der Mischkammerperipherie in das Mischkammerinnere erstreckt und die einströmende Kühlluft auf den gesamten Querschnitt der Mischkammer verteilt. Die Kühlluft schützt dabei gleichzeitig das Verteilerplattensystem vor thermischer Überbeanspruchung.

Nach einem besonderen Merkmal der Erfindung kann die in die Mischkammer einströmende Kühlluft vom Verteilerplattensystem in wenigstens zwei Kühlluftteilströme aufgeteilt werden, von denen der eine Teilstrom gegen die Verteilerplatte prallt und mehr zum Zentrum der Mischkammer gelenkt wird, während der andere Teilstrom durch ein Leitblech mehr in den Peripheriebereich des Innenraums der Mischkammer gelenkt wird. Dabei können in den Zwischenraum zwischen dem Mischkammermantel und dem Leitblech bzw. Verteilerprallblech, das sich über wenigstens einen Teil der Höhe der Mischkammer erstreckt, ein oder mehrere über die Mischkammerhöhe verteilt angeordnete und etwa radial zur Mischkammer liegende verstellbare Stellglieder wie z. B. Kühlluft-Schieber einschiebbar angeordnet sein, um in bestimmten Querschnittshöhenebenen der Mischkammer auf bestimmte Mengenverteilungen der mehr zum Zentrum sowie der mehr zur Peripherie der Mischkammer strömenden Kühlluftteilströme und damit auf die Temperaturverteilung im abgekühlten Mischgasstrom Einfluß nehmen zu können.

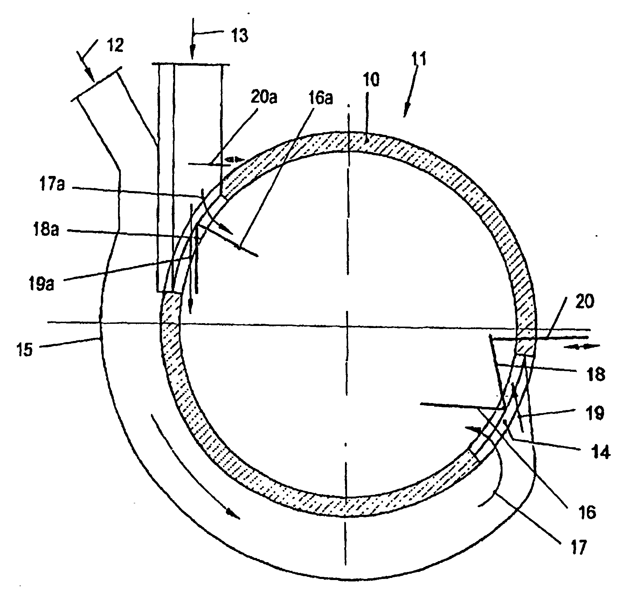

Die Erfindung und deren weitere Merkmale und Vorteile werden anhand des in der Zeichnung schematisch dargestellten Ausführungsbeispieles näher erläutert.

Die Zeichnung zeigt als Ausführungsbeispiel den Querschnitt durch den z. B. vertikal angeordneten zylindrischen Mantel 10 einer Mischkammer 11, in welche aus der Drehofenabgassteigleitung bzw. aus der Gut-Einlaufkammer des Drehrohrofens einer Zementklinkerproduktionslinie ein z. B. 1200° C heißer, mit Staub, Kondensationskeimen und kondensierenden/kristallisierenden Dämpfen und ggf. gasförmigen Schadstoffen belasteter Teilgasstrom eingesaugt wird, der durch ebenfalls eingesaugte Außenluft 12 bzw. 13 (Kühlluft) abgekühlt wird. Der feuerfest ausgekleidete Mantel 10 der Mischkammer weist wenigstens eine Eintrittsöffnung 14 für die über Leitung 15 herangeführte Kühlluft 12 auf. Im Bereich der Kühlluft-Eintrittsöffnung 14 des Mischkammermantels ist eine Verteilerprallplatte 16 angeordnet, deren Ebene im Mischkammerquerschnitt betrachtet parallel zur Mischkammerachse liegt, wobei sich die Verteilerprallplatte 16 ausgehend vom Mischkammermantelbereich radial bzw. sekantial liegend von der Mischkammerperipherie in das Mischkammerinnere erstreckt und die einströmende Kühlluft 17 auf den gesamten Querschnitt der Mischkammer gleichmäßig verteilt, was zu einem homogenen, über den gesamten Querschnitt des abgekühlten Mischgasstroms verteilten Temperaturprofil von z. B. etwa 350° C führt. Dadurch wird besonders auch nach einer Wassereindüsung eine über den gesamten Heißgasquerschnitt gleichmäßige Schadstoffkondensation mit Vermeidung von lokal angehäuften Feststoffanbackungen erreicht.

Von der Verteilerprallplatte 16 ausgehend von ihrer radial bzw. sekantial äußeren Kühlluftanströmkante ist ein Leitblech 18 abgewinkelt, dessen Ebene ebenfalls parallel zur Mischkammerachse liegt und das sekantial zum zylindrischen Mischkammermantel liegend angeordnet ist. Dieses Leitblech 18 lenkt einen Teilstrom 19 der in die Mischkammer einströmenden Kühlluft in den Peripheriebereich der Mischkammer. Gemäß Ausführungsbeispiel wird also die in die Mischkammer einströmende Kühlluft vom Verteilerplattensystem 16, 18 in zwei Kühlluftteilströme aufgeteilt, von denen der eine Teilstrom 17 gegen die Verteilerplatte 16 prallt und mehr zum Zentrum der Mischkammer gelenkt wird, während der andere Teilstrom 19 durch das Leitblech 18 mehr in den Peripheriebereich des Innenraums der Mischkammer gelenkt wird, wodurch insgesamt mit Sicherheit das homogen gleichmäßig verteilte Temperatur- und Druckprofil in der Mischkammer 11 erzielt wird.

In den Zwischenraum zwischen dem Mischkammermantel 10 und dem Leitblech 18 bzw. Verteilerprallblech, das sich über wenigstens einen Teil der Höhe der Mischkammer erstreckt, können ein oder mehrere über die Mischkammerhöhe verteilt angeordnete und etwa radial zur Mischkammer liegende verstellbare Stellglieder wie z. B. Kühlluft-Schieber 20 durch den Mischkammermantel 10 einschiebbar angeordnet sein, durch deren Betätigung bzw. Stellung auf die Mengenverteilung zwischen den Kühlluftteilströmen 19 und 17 Einfluß genommen werden kann, und zwar individuell in verschiedenen Höhenquerschnittsebenen der Mischkammer 11. Auch außerhalb der entsprechenden Kühllufteintrittsöffnung 14 in die Mischkammer 11 kann, wie gezeigt in der Zuleitung für die Kühlluft 13, in dieser Zuleitung ein solcher Kühlluft-Schieber 20a angeordnet sein zur Beeinflussung der Kühlluftverteilung in der Mischkammer.

Bei der Mischkammer des zeichnerischen Ausführungsbeispiels ist noch eine weitere Kühllufteinmischung ebenfalls mit Verteilerplattensystem 16a, 18a angeordnet. Auch durch das zweite Verteilerplattensystem wird eine homogene Temperatur- und Druckverteilung über den gesamten Querschnitt des abgekühlten Mischgasstroms mit den damit verbundenen oben beschriebenen Vorteilen erzielt.

## Patentansprüche

1. Verfahren zur Kühlung eines Heißgasstroms, der mit zu Anbackungen neigenden Staubfrachten und/oder gasförmigen/dampfförmigen Schadstoffen belastet ist, mit einer Mischkammer (11) zur Einmischung von Kühlluft (12 bzw. 13) in den Heißgasstrom zwecks nachfolgender Abtrennung schadstoffhaltigen Staubes vom abgekühlten Mischgasstrom und/oder Verringerung gasförmiger Schadstoffemissionen,
**dadurch gekennzeichnet, daß** die Kühlluft durch wenigstens eine Eintrittsöffnung (14) im Mantel (10) der Mischkammer (11) eingeführt wird derart, daß die einströmende Kühlluft (17 bzw. 17a) im Peripheriebereich der Mischkammer gegen wenigstens ein Verteilerplattensystem (16, 16a) prallt, durch welches die Kühlluft sowohl auf das Zentrum als auch auf die Peripherie der Mischkammer rasch verteilt wird.

2. Verfahren nach Anspruch 1,
**dadurch gekennzeichnet, daß** die in die Mischkammer (11) einströmende Kühlluft vom Verteilerplattensystem (16, 18) in wenigstens zwei Kühlluftteilströme aufgeteilt wird, von denen der eine Teilstrom (17) gegen die Verteilerplatte (16) prallt und mehr zum Zentrum der Mischkammer gelenkt wird, während der andere Teilstrom (19) durch ein Leitblech (18) mehr in den Peripheriebereich des Innenraums der Mischkammer gelenkt wird.

3. Einrichtung zur Einmischung von Kühlluft in einen Heißgasstrom, der mit zu Anbackungen neigenden Staubfrachten und/oder kondensierenden/kristallisierenden Dämpfen belastet ist, mit einer vom Heißgasstrom durchströmten Mischkammer (11), deren Mantel (10) wenigstens eine Eintrittsöffnung (14) für die Kühlluft (17) aufweist,
**dadurch gekennzeichnet, daß** in der Mischkammer (11) im Bereich der Kühlluft-Eintrittsöffnung (14) wenigstens eine Verteilerprallplatte (16) angeordnet ist, deren Ebene im zylindrischen Mischkammerquerschnitt betrachtet parallel zur Mischkammerachse liegt, wobei sich die Verteilerprallplatte (16) ausgehend vom Mischkammermantelbereich radial bzw. sekantial liegend von der Mischkammerperipherie in das Mischkammerinnere erstreckt und die einströmende Kühlluft (17) auf den gesamten Querschnitt der Mischkammer (11) verteilt.

4. Einrichtung nach Anspruch 3,
**dadurch gekennzeichnet, daß** von der Verteilerprallplatte (16) ausgehend von ihrer radial bzw. sekantial äußeren Kühlluftanströmkante ein Leitblech (18) abgewinkelt ist, das sekantial zum zylindrischen Mischkammermantel liegt und das einen Teilstrom (19) der in die Mischkammer einströmenden Kühlluft in den Peripheriebereich der Mischkammer lenkt.

5. Einrichtung nach Anspruch 3 oder 4,
**dadurch gekennzeichnet, daß** in den Zwischenraum zwischen dem Mischkammermantel und dem Leitblech (18) bzw. Verteilerprallblech, das sich über wenigstens einen Teil der Höhe der Mischkammer erstreckt, ein oder mehrere über die Mischkammerhöhe verteilt angeordnete und etwa radial zur Mischkammer liegende verstellbare Stellglieder wie z. B. Kühlluft-Schieber (20) einschiebbar angeordnet sind.

6. Einrichtung nach einem oder mehreren der Ansprüche 3 bis 5,
**dadurch gekennzeichnet, daß** in der Zuleitung für die Kühlluft (13) außerhalb der entsprechenden Mischkammer-Kühllufteintrittsöffnung (14) ein Kühlluft-Stellorgan (20a) angeordnet ist.

## Claims

1. Method for cooling a hot-gas stream which is laden with dust loads tending to caking and/or with gaseous/vaporous pollutants, with a mixing chamber (11) for the mixing of cooling air (12 or 13) into the hot-gas stream for the purpose of the subsequent separation of pollutant-containing dust from the cooled mixed-gas stream and/or of the reduction of gaseous pollutant emissions, **characterized in that** the cooling air is introduced through at least one entry orifice (14) in the casing (10) of the mixing chamber (11) in such a way that the inflowing cooling air (17 or 17a) impinges, in the peripheral region of the mixing chamber, against at least one distributor-plate system (16, 16a), by means of which the cooling air is quickly distributed both to the centre and to the periphery of the mixing chamber.

2. Method according to Claim 1, **characterized in that** the cooling air flowing into the mixing chamber (11) is divided by the distributor-plate system (16, 18) into at least two cooling-air part-streams, of which one part-stream (17) impinges against the distributor plate (16) and is steered more towards the centre of the mixing chamber, whilst the other part-stream (19) is steered by a guide plate (18) more into the peripheral region of the interior of the mixing chamber.

3. Apparatus for the mixing of cooling air into a hot-gas stream which is laden with dust loads tending to caking and/or with condensing/crystallizing vapours, with a mixing chamber (11) through which the hot-gas stream flows and the casing (10) of which has at least one entry orifice (14) for the cooling air (17), **characterized in that** the mixing chamber (11) has arranged in it, in the region of the cooling-air entry orifice (14), at least one distributor baffle plate (16), the plane of which lies parallel to the mixing-chamber axis, as seen in a cylindrical mixing-chamber cross section, whilst, starting from the mixing-chamber casing region, the distributor baffle plate (16) extends radially or secantially from the mixing-chamber periphery into the mixing-chamber interior and distributes the inflowing cooling air (17) to the entire cross section of the mixing chamber (11).

4. Apparatus according to Claim 3, **characterized in that** the distributor baffle plate (16) has angled away from it, starting from its radially or secantially outer cooling-air onflow edge, a guide plate (18) which lies secantially to the cylindrical mixing-chamber casing and which steers a part-stream (19) of the cooling air flowing into the mixing chamber into the peripheral region of the mixing chamber.

5. Apparatus according to Claim 3 or 4, **characterized in that** one or more adjustable actuators, such as, for example, cooling-air slides (20), arranged so as to be distributed over the mixing-chamber height and lying approximately radially to the mixing chamber are arranged so as to be capable of being pushed into the interspace between the mixing-chamber casing and the guide plate (18) or distributor baffle plate which extends over at least part of the height of the mixing chamber.

6. Apparatus according to one or more of Claims 3 to 5, **characterized in that** a cooling-air actuating member (20a) is arranged in the supply line for the cooling air (13), outside the corresponding mixing-chamber cooling-air entry orifice (14).

## Revendications

1. Procédé pour refroidir un courant gazeux chaud, qui est chargé de charges de poussière ayant tendance à s'agglutiner et/ou de polluants sous forme de gaz/vapeur, avec une chambre de mélange (11) pour y mélanger de l'air froid (12, respectivement 13) dans le courant gazeux chaud, dans le but de séparer par la suite de la poussière contenant des polluants d'avec le courant gazeux mixte refroidi, et/ou de diminuer les émissions polluantes gazeuses,
**caractérisé en ce que** l'air froid est introduit par au moins une ouverture d'admission (14) dans l'enveloppe (10) de la chambre de mélange (11), de sorte que le courant froid admis (17, respectivement 17a) dans la zone périphérique de la chambre de mélange frappe contre au moins un système distributeur à plaques (16, 16a) à l'aide duquel l'air froid est distribué rapidement aussi bien sur le centre que sur la périphérie de la chambre de mélange.

2. Procédé selon la revendication 1,
**caractérisé en ce que** l'air froid pénétrant dans la chambre de mélange (11) du système distributeur à plaques (16, 18) est divisé en au moins deux courants partiels d'air froid dont l'un (17) frappe contre la plaque distributrice (16) et est défléchi davantage vers le centre de la chambre de mélange, tandis que l'autre courant partiel (19) est défléchi par une tôle déflectrice (18) davantage dans la zone périphérique du volume intérieur de la chambre de mélange.

3. Dispositif pour mélanger de l'air froid dans un courant gazeux chaud qui est chargé de charges de poussière ayant tendance à s'agglutiner et/ou de vapeurs qui se condensent/se cristallisent, avec une chambre de mélange (11) traversée par le courant gazeux chaud, dont l'enveloppe (10) présente au moins une ouverture d'admission (14) pour l'air froid (17),
**caractérisé en ce que**, dans la chambre de mélange (11) au moins une plaque déflectrice distributrice (16) est disposée dans la zone de l'ouverture d'admission pour l'air froid (14), plaque dont le plan, examiné selon la section cylindrique de la chambre de mélange, se trouve parallèle à l'axe de la chambre de mélange, la plaque déflectrice distributrice (16) partant de la zone de l'enveloppe de la chambre de mélange s'étendant radialement ou de façon sécante à partir de la périphérie de la chambre de mélange dans l'intérieur de la chambre de mélange, et l'air froid y pénétrant (17) étant distribué sur la section entière de la chambre de mélange (11).

4. Dispositif selon la revendication 3,
**caractérisé en ce qu'**à partir de la plaque déflectrice distributrice (16), sortant de son bord d'attaque de l'air froid, radialement externe ou de façon sécante, une tôle déflectrice (18) est pliée, qui se trouve de façon sécante par rapport à l'enveloppe cylindrique de la chambre de mélange et qui dirige un courant partiel (19) de l'air froid pénétrant dans la chambre de mélange dans la zone périphérique de la chambre de mélange.

5. Dispositif selon la revendication 3 ou 4,
**caractérisé en ce que**, dans l'interstice entre l'enveloppe de la chambre de mélange et la tôle déflectrice (18) respectivement la tôle déflectrice distributrice, qui s'étend sur au moins une partie de la hauteur de la chambre de mélange, un ou plusieurs actionneurs réglables, comme par exemple des volets pour air froid (20), disposés de façon distribuée sur la hauteur de la chambre de mélange et se trouvant approximativement radialement par rapport à la chambre de mélange, sont disposés de façon rétractable.

6. Dispositif selon l'une ou plusieurs des revendications 3 à 5,
**caractérisé en ce que** dans la conduite d'amenée pour l'air froid (13), un organe de réglage d'air froid (20a) est disposé à l'extérieur de l'ouverture d'admission (14) correspondante pour l'air froid de la chambre de mélange.
